# EUROPEAN PATENT SPECIFICATION

(11) **EP 1 001 253 B1**
(45) Date of publication and mention of the grant of the patent: **13.04.2005**
(21) Application number: 99121658.1
(22) Date of filing: 02.11.1999
(51) Int. Cl.: G01F 1/06

(54) **Improvements to flowmeters**
Verbesserungen für Durchflussmesser
Ameliorations aux debitmetres

(30) Priority: 10.11.1998 IT MI980727 U
(43) Date of publication of application: 17.05.2000
(73) Proprietor: GICAR S.r.l., 23807 MERATE (Lecco) (IT)
(72) Inventor: Arlati, Giuseppe, 23875 Osnago (Lecco) (IT)
(74) Representative: Carloni, Franco

(56) References cited:
- US-A- 4 179 925
- US-A- 4 499 754
- US-A- 4 793 190
- US-A- 5 728 949

## Description

This invention generally relates to flowmeters for measuring the flow rate of a liquid stream flowing under pressure in a conduit. In particular, the invention relates to a flowmeter of conventional design which has been improved so as to make it adapted for measuring also the flow of a liquid intended to be used for food purposes without causing the liquid to be chemically contaminated by substances dangerous to the health and emitted from the materials forming the flowmeter.

The flowmeters are widely employed in several industrial processes and, recently, also in machines and/or apparatus for dispensing beverages, for example coffee express machines and the like, in which their task is to accurately measure the exact dosis of an alimentary liquid to be introduced into the beverage preparation cycle.

The most of the recent flowmeters employed in the above mentioned machines operate by means of a rotating member. The revolution number of the rotating member is proportional to the volume of liquid passing through the flowmeter in a predetermined time period. The counting of the rotating member revolutions is performed by a pulse transducer embodied in the flowmeter and operating by induction or by Hall effect. The pulses generated by these transducers are processed in a digital processor and used for controlling an electrically operated valve through which the alimentary liquid delivery is controlled.

In a known embodiment, the flowmeter comprises a horizontally slit body which hermetically encloses a chamber in which a rotor provided with circumferential blades is fitted. The meter body is provided with openings and/or inlet and outlet conduits for permitting the liquid to flow through the rotor containing chamber.

For the body of the flowmeter, it is preferable to use a material combining a good structural stiffness and a good corrosion resistance. To this purpose, a special brass containing, in addition to copper and zinc, a percentage of lead which makes this alloy adapted to be drawed can be, for example, employed. This percentage of lead which, as known, is toxic for the human body, makes the body of the flowmeter unsuitable for food purposes because the lead emitted by the body in the liquid would be in a greater concentration than the maximum permissible by the most strict standards, f.i. the standards of the United States of America in which the maximum permissible lead concentration is 15 p.p.b., (parts per billion).

In order to obviate this drawback, the body of the flowmeter is formed of brass alloys free of lead. However, such alloys are very difficult to be mechanically machined, so that their use would make the flowmeter very expensive.

Another way for obviating the problem of the lead emissions from the brass, consists in coating the portions made of brass of the flowmeters intended to be wetted by the alimentary liquid, f.i. the chamber in which the rotor is fitted, by means of a layer of insulating material which is compatible with the liquid passing therethrough. In this way a direct contact between the liquid and the material of which the flowmeter is made is avoided.

However, all the portions of the flowmeter which are in contact with the liquid cannot be coated with this layer of insulating material. For example, the walls of the inlet and outlet conduits of the flowmeter body cannot be coated and, therefore, in these conduits the alimentary liquid will unavoidably directly contact the brass.

extremely severe accelerated ageing tests conducted on flow meters having a brass body and a chamber containing the rotor coated with Teflon have evidenced the fact that, in spite of the reduced extension of the inlet and outlet conduits and the brief time during which the alimentary liquid is in contact with their walls, the lead concentration detected in the alimentary liquid passing through such flowmeters is greater than the maximum permissible limit of the standards of the United States of America.

Therefore the object of the present invention is to improve the flowmeters of conventional type having a metal body so as to permit their use for measuring also the flow rate of an alimentary liquid without the risk of chemically contaminating it by substances toxic for the human body existing in the metal material forming the flowmeter body, particularly lead.

According to the present invention this is obtained by providing a flowmeter for measuring the flow rate of a liquid, particularly of a liquid used for food purposes, comprising a metal body hermetically enclosing a chamber coated by an insulating material, containing a rotor and provided with inlet and outlet conduits for the passage of a liquid through this chamber so that it can operate the rotor, characterised in that the insulating material used for coating the rotor containing chamber is formed of a fluorinated polymer and in that means are provided for preventing any contact between the liquid and the walls of said conduits.

According to a feature of the present invention, the means for preventing any contact between the liquid and the walls of the inlet and outlet conduits are formed of tubular elements accurately fitted in the conduits and intended to coat their walls without adhering thereto.

According to another feature of the invention, two tubular elements are fitted in the inlet conduit, the first of which is arranged in the end portion of the inlet conduit and the second of which is arranged in the initial portion of the inlet conduit in adjacent relationship with the first tubular element, the first tubular element being conformed so as to convert into kinetic energy the major portion of the static energy of the liquid entering the flowmeter.

According to still another feature of the invention, the tubular elements are formed of a material chemically compatible with the alimentary liquid passing through the flowmeter.

Further features and advantages of the present invention will be more apparent from the following detailed description in connection with the accompanying drawings, wherein:
Fig. 1 is a top plan view of the flowmeter according to the present invention;
Fig. 2 is a sectional view thereof, taken along the line II-II of Fig. 1;
Fig. 3 is a view similar to Figure 1, but with a flowmeter shown in open configuration;
Fig. 4 is a sectional view of the flowmeter taken along the line IV-IV of Figure 3;
Fig. 5 is a sectional view of the flowmeter taken along the line V-V of Figure 3;
Fig. 6 is a top plan view of a modification of the flowmeter according to the present invention;
Fig. 7 is a sectional view taken along the line VII-VII of the Figure 6;
Fig. 8 is a top plan view of the flowmeter according to the modification of Figure 6, shown in open configuration and in partial section;
Fig. 9 is a sectional view of Fig. 8, taken along the line IX-IX thereof; and
Fig. 10 is a sectional view of Fig. 8 taken along the line X-X thereof.

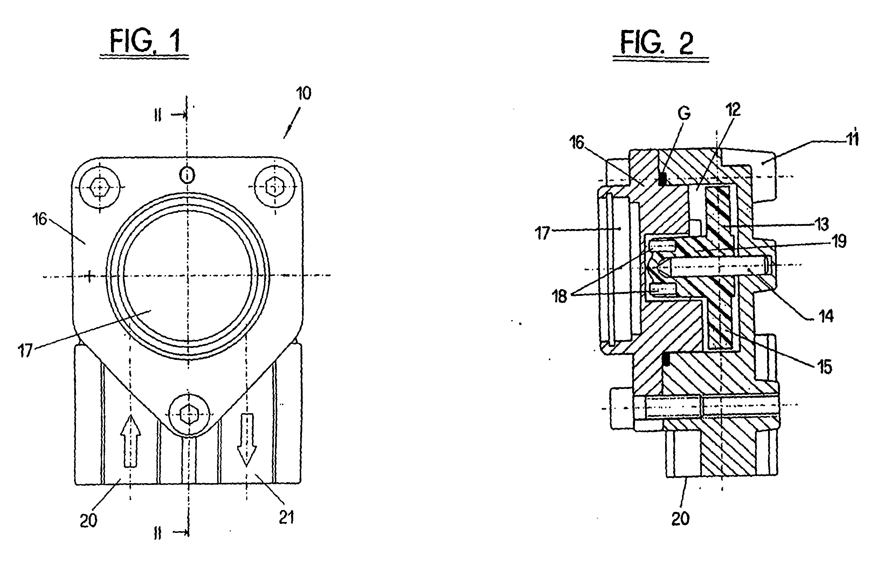

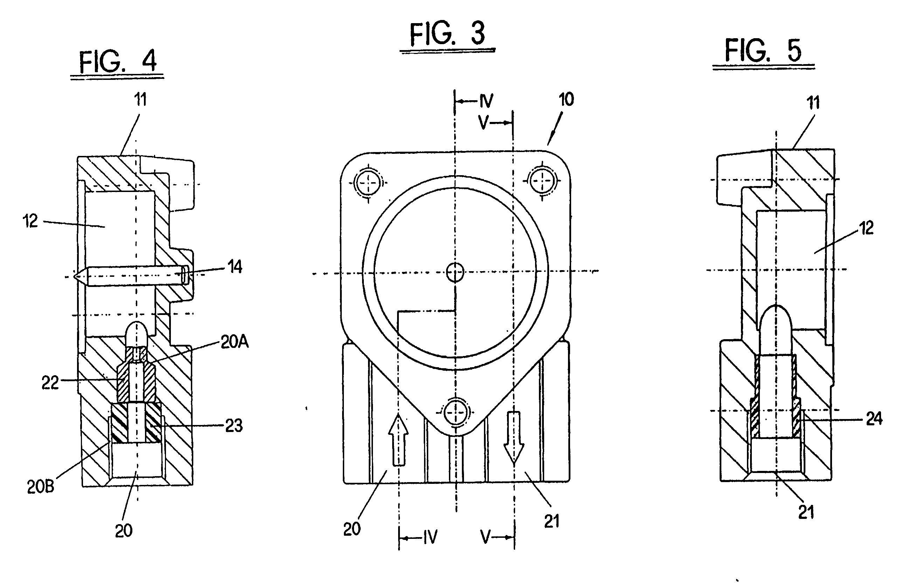

In the Figs 1 to 5 there is shown the flowmeter according to the present invention to be used in a beverage dispensing apparatus, f.i. a coffee express machine. The flowmeter, generally designated by 10, comprises a horizontally split body 11 generally formed of metal materials or their alloys, particularly brass. This flowmeter body 11 hermetically encloses a chamber 12 coated by an insulating material, in the inner portion of which a rotor 13 mounted on a stainless steel pin 14 and provided with peripheral blades 15 is arranged. The body 11 of the flowmeter comprises a closure element or head 16 in which a housing for a pulse transducer 17 is formed. The transducer 17 counts the revolutions of the rotor 13 by means of current or voltage pulses contactless generated by permanent magnets 18 in the rotor hub 19 and transmitted to a digital processor. An 0-ring G in a material suitable for foods permits the tightness of the closure between the body 11 and the head 16 of the flowmeter. The flowmeter body 11 is also provided with inlet and outlet conduits 20, 21 for causing the liquid to pass through the chamber 12 so as to operate the rotor 13.

The improvement to the flowmeter according to the present invention consists in preventing any contact between the alimentary liquid passing through the flowmeter 10 and those portions of the flowmeter body 11, particularly the walls of the inlet and outlet conduits 20,21 which would be wetted by the liquid since they cannot practically be coated by a layer of insulating material as the chamber 12. This contact, if any, would cause in time an alteration of the alimentary liquid generated by the substances existing in the material of the flowmeter body 11, f.i. lead in the case of a brass flowmeter.

According to the invention, as insulating material for coating the chamber 12 a fluorinated polymer is used, particularly Teflon. With this material there are obtained:
a resistance to high temperatures,
   - a resistance to the chemical etch and the indissolubility in all the common solvents,
   - a low frictional coefficient.

On the contrary, the portions of the flowmeter which cannot be coated with this fluorinated polymer for the impossibility of carrying out these operations, such as the inlet and outlet conduits 20,21 are prevented to contact the liquid by means of tubular elements 22,23 and 24 intended to be accurately fitted inside these conduits.

In particular, the tubular element 22 is a nozzle fitted in the portion 20A of the inlet conduit 20 and contoured in such a manner as to convert into kinetic energy the major portion of the static energy of the liquid. The tubular element 23 is fitted in the initial portion 20B of the inlet conduit 20 and is adjacent to the tubular element 22. Finally, the tubular element 24 is fitted in the outlet conduit 21.

In this manner the liquid, flowing in the tubular elements 22,23,24 covering the walls of the inlet and outlet conduits 20,21 will never contact them.

Of course, the tubular elements will be manufactured in materials compatible with the alimentary liquid. For example, the tubular element 22 could be produced in stainless steel, while the tubular elements 23,24 could be produced in a fluorinated polymer, preferably the same material as that used for coating the chamber 12, i.e. Teflon.

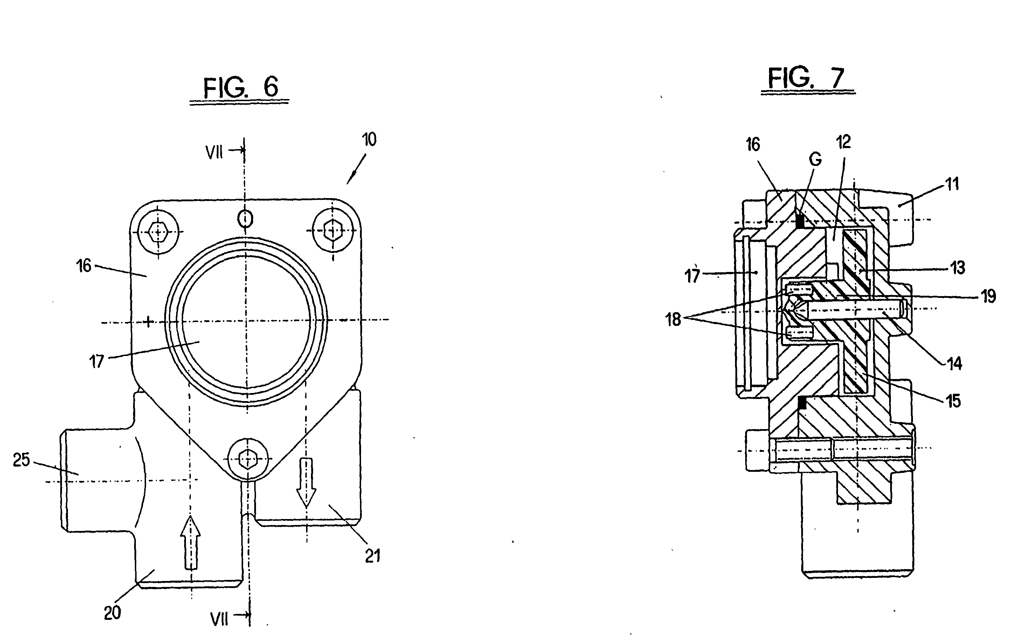

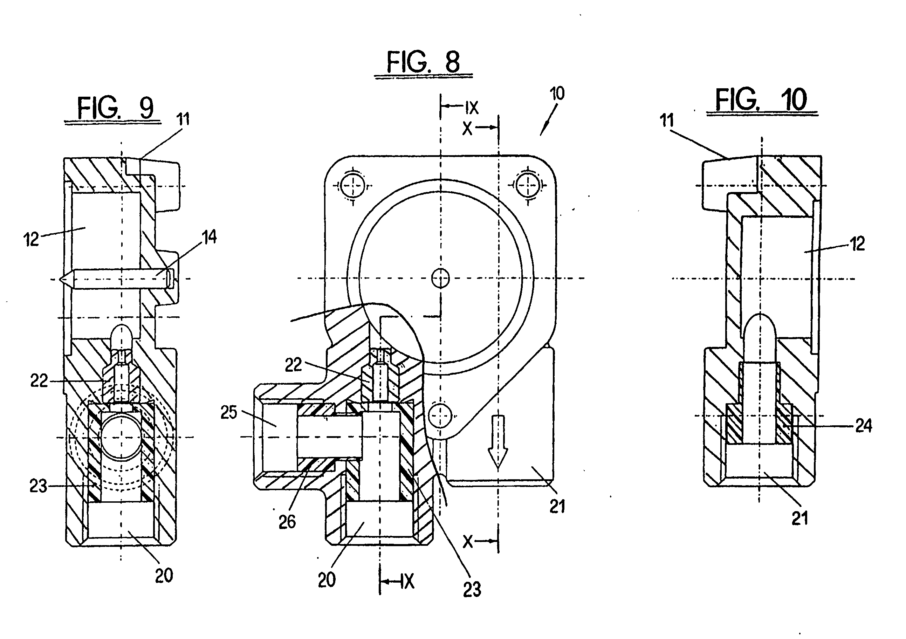

Referring now to Figs 6 to 10, there is shown another embodiment of the flowmeter according to the present invention. The same components as those of Figs 1 to 5 are designated by the same reference numbers. According to this embodiment, the flowmeter 10 is provided, in addition to the inlet conduit 20, also with a branch conduit 25, in the case a side connection for the flowmeter is provided, so that also in this branch conduit 25 a tubular element 26 substantially like to the tubular element 24 is fitted.

As shown in the Figures of the drawings, there is shown the case in which for the serial connection of the flowmeter 10 to the alimentary liquid distribution line connectors in stainless steel or food compatible material are provided which can be screwed in the threaded portions of the inlet and outlet conduits 20,21 and, therefore, the tubular elements 23,24 and 26 have a shape and particularly a length adapted to permit such connectors to be screwed. On the contrary, in the case, not shown, in which the connection of the flowmeter 10 to the alimentary liquid distribution line is made through a front flanged connector, the tubular elements 23,24,26 suitably have such a length as to cover all the inlet, outlet and branch conduits 20,21,25.

In order to evaluate the performances according to the USA-standards, the flowmeter according to the present invention with a brass body has been subjected to an accelerated ageing test during which particularly severe operation conditions have been simulated which cannot occur during the real operation. The results of this test are listed in the table 1.

**Table 1**

| Parameter | Result | Measuring units |
|---|---|---|
| Final volume of composite sample (C1,C2) | 3 | liters |
| Pb concentration-control sample (C1) | 0,0000 | p.p.b. * |
| Pb concentration-composite sample (C2) | 1,8480 | p.p.b. * |
| Pb extraction level (C2-C1) | 1,8480 | p.p.b. * |
| Required maximum Pb extraction level | 15 | p.p.b. * |
| Actual Pb extraction level | 1,85 | p.p.b. * |

| | | |
|---|---|---|
| * Parts per billion | | |

From the foregoing it can be seen that the flowmeter according to the present invention accomplishes the above objects. In particular, the flowmeter is suitable to treat the flow of liquids used for food purposes, and this for the reduced emission of substances harmful to health which are possibly present in the material forming the flowmeter body.

It will be apparent to a persons skilled in the art that several modifications and variations can be made to the flowmeter according to the present invention without departing from the scope of the invention.

## Claims

1. Flowmeter for measuring a flow rate of a liquid, particularly of a liquid used for food purposes, comprising a metal body (11) hermetically enclosing a chamber (12) coated by an insulating material, containing a rotor (13) and provided with inlet and outlet conduits (20,21,25) for the passage of a liquid through said chamber (12) so that it can operate the rotor (13), **characterised in that** the insulating material used for coating the rotor containing chamber (12) is formed of a fluorinated polymer and **in that** means (22,23,24,26) are provided for preventing any contact between the liquid and the walls of said conduits (20,21,25).

2. Flowmeter according to claim 1, **characterised in that** said means (22,23,24,26) for preventing any contact between the liquid and the walls of the inlet and outlet conduits (20,21,25) are formed of tubular elements (22,23,24,26) exactly fitted in said conduits and intended to coat the walls thereof without adhering thereto.

3. Flowmeter according to claim 2, **characterised in that** two tubular elements (22,23) are fitted in the inlet conduit (20), the first of which (22) is arranged in the end portion (20A) of the inlet conduit (20) and the second of which (23) is arranged in the initial portion (20B) of the inlet conduit (20) in adjacent relationship with the first tubular element (22), the first tubular element (22) being conformed so as to convert into kinetic energy the major portion of the static energy of the liquid entering the flowmeter.

4. Flowmeter according to claim 2, **characterised in that** said tubular elements (22,23,24,26) are formed of a material chemically compatible with the alimentary liquid intended to be passed through the flowmeter.

5. Flowmeter according to claim 4, **characterised in that** said tubular elements (22,23,24,26) are made of stainless steel.

6. Flowmeter according to claim 4, **characterised in that** said tubular elements (22,23,24,26) are made of ceramic material.

7. Flowmeter according to claim 4, **characterised in that** said tubular elements (22,23,24,26) are made of fluorinated polymers.

8. Flowmeter according to claim 7, **characterised in that** the fluorinated polymer used for coating the chamber (12) and for forming the tubular elements (22,23,24,26), is Teflon.

## Patentansprüche

1. Durchflussmesser zum Messen der Fördermenge einer Flüssigkeit, insbesondere einer für Nahrungszwecke verwendete Flüssigkeit, bestehend aus einem Metallkörper (11), der eine mit einem Isoliermaterial ausgekleidete Kammer (12) hermetisch einschließt, die einen Rotor (13) enthält und mit Einlaufund Auslaufleitungen (20,21,25) für den Durchgang einer Flüssigkeit durch die Kammer (12) versehen ist, so dass sie den Rotor (13) betätigen kann, **dadurch gekennzeichnet, dass** das zum Auskleiden der den Rotor (13) enthaltenden Kammer (12) verwendete Isoliermaterial aus einem fluoridierten Polymer gebildet ist, und dass die Mittel (22,23,24,26) dazu vorgesehen sind, um jede Berührung der Flüssigkeit mit den Wänden der Leitungen (20,21,25) zu verhindern.

2. Durchflussmesser nach Anspruch 1, **dadurch gekennzeichnet, dass** die Mittel (22,23,24,26) zum Verhindern einer Berührung der Flüssigkeit mit den Wänden der Einlauf- und Auslaufleitungen (20,21,25) aus Rohrelementen (22,23,24,26) gebildet sind, die genau in die Leitungen eingepasst und zum Auskleiden deren Wände, ohne daran anzuhaften, bestimmt sind.

3. Durchflussmesser nach Anspruch 2, **dadurch gekennzeichnet, dass** zwei Rohrelemente (22,23) in die Einlaufleitung (20) eingepasst sind, wovon das erste Rohrelement (22) im Endabschnitt (20A) der Einlaufleitung (20) und das zweite Rohrelement (23) im Vorderabschnitt (20B) der Einlaufleitung (20) in der Nähe des ersten Rohrelements (22) angeordnet ist, wobei das erste Rohrelement (22) derart ausgebildet ist, dass es den Großteil der statischen Energie der in den Durchflussmesser einlaufenden Flüssigkeit in kinetische Energie umwandelt.

4. Durchflussmesser nach Anspruch 2, **dadurch gekennzeichnet, dass** die Rohrelemente (22,23,24,26) aus einem mit der durch den Durchflussmesser durchfließenden Nahrungsflüssigkeit chemisch kompatiblen Material gebildet sind.

5. Durchflussmesser nach Anspruch 4, **dadurch gekennzeichnet, dass** die Rohrelemente (22,23,24,26) aus rostfreiem Stahl gefertigt sind.

6. Durchflussmesser nach Anspruch 4, **dadurch gekennzeichnet, dass** die Rohrelemente (22,23,24,26) aus Keramik gefertigt sind.

7. Durchflussmesser nach Anspruch 4, **dadurch gekennzeichnet, dass** die Rohrelemente (22,23,24,26) aus fluoridierten Polymeren gefertigt sind.

8. Durchflussmesser nach Anspruch 7, **dadurch gekennzeichnet, dass** der fluoridierte Polymer, der zum Auskleiden der Kammer (12) und zur Bildung der Rohrelemente (22,23,24,26) verwendet wird, Teflon ist.

## Revendications

1. Débitmètre pour mesurer un débit d'un liquide, en particulier d'un liquide utilisé à des fins alimentaires, comprenant un corps (11) métallique enfermant hermétiquement une chambre (12) revêtue d'un matériau isolant, contenant un rotor (13) et muni de conduits (20, 21, 25) d'entrée et de sortie pour le passage d'un liquide dans la chambre (12), de manière à faire fonctionner le rotor (13), **caractérisé en ce que** le matériau isolant utilisé pour revêtir la chambre (12) contenant le rotor est formé d'un polymère fluoré, et **en ce qu'**il est prévu des moyens (22, 23, 24, 26) pour empêcher tout contact entre le liquide et les parois des conduits (20, 21, 25).

2. Débitmètre suivant la revendication 1, **caractérisé en ce que** les moyens (22, 23, 24, 26) pour empêcher tout contact entre le liquide et les parois des conduits (20, 21, 25) d'entrée et de sortie, sont formés d'éléments (22, 23, 24, 26) tubulaires, ajustés exactement dans les conduits et destinés à en revêtir les parois sans y adhérer.

3. Débitmètre suivant la revendication 2, **caractérisé en ce que** deux éléments (22, 23) tubulaires sont adaptés dans le conduit (20) d'entrée, le premier d'entre eux (22) étant disposé dans la partie (20A) d'extrémité du conduit (20) d'entrée et le second (23) d'entre eux étant disposé dans la partie (20B) initiale du conduit (20) d'entrée au voisinage du premier élément (22) tubulaire, le premier élément (22) tubulaire étant conformé de manière à transformer en énergie cinétique la plus grande partie de l'énergie statique du liquide entrant dans le débitmètre.

4. Débitmètre suivant la revendication 2, **caractérisé en ce que** les éléments (22, 23, 24, 26) tubulaires sont formés en un matériau compatible chimiquement avec le liquide alimentaire destiné à passer dans le débitmètre.

5. Débitmètre suivant la revendication 4, **caractérisé en ce que** les éléments (22, 23, 24, 26) tubulaires sont en acier inoxydable.

6. Débitmètre suivant la revendication 4, **caractérisé en ce que** les éléments (22, 23, 24, 26) tubulaires sont en céramique.

7. Débitmètre suivant la revendication 4, **caractérisé en ce que** les éléments (22, 23, 24, 26) tubulaires sont en polymère fluoré.

8. Débitmètre suivant la revendication 7, **caractérisé en ce que** le polymère fluoré utilisé pour revêtir la chambre (12) et pour former les éléments (22, 23, 24, 26) tubulaires est du Téflon.
